# EUROPEAN PATENT APPLICATION

(11) **EP 3 432 617 A1**
(43) Date of publication of application: **23.01.2019**
(21) Application number: 16897519.1
(22) Date of filing: 05.04.2016
(51) Int. Cl.: H04W 4/20

(54) **METHOD, APPARATUS AND DEVICE FOR DETERMINING TRANSMISSION SCHEME**

(71) Applicant: Huawei Technologies Co., Ltd., Longgang District Shenzhen, Guangdong 518129 (CN)
(72) Inventor: LI, Chenwan, Shenzhen Guangdong 518129 (CN); YU, Yinghui, Shenzhen Guangdong 518129 (CN); HUANG, Zhenglei, Shenzhen Guangdong 518129 (CN); SHAN, Baokun, Shenzhen Guangdong 518129 (CN)
(74) Representative: Maiwald Patent- und Rechtsanwaltsgesellschaft mbH
(86) International application number: PCT/CN2016/078501
(87) International publication number: WO 2017/173584

(57) **Abstract**

The present invention provides a method and an apparatus for determining a transmission solution and a device. The method includes: obtaining, by a base station, a transmission solution switching instruction of UE, where the transmission solution switching instruction of the UE is used to instruct to switch a transmission solution of the UE from user plane transmission to control plane transmission or from control plane transmission to user plane transmission, and configuring, by the base station, a switched-to transmission solution with the UE based on the transmission solution switching instruction. The base station obtains the transmission solution switching instruction by using statuses of the UE or a core network device, and configures the switched-to transmission solution with the UE, so that switching of the transmission solution of the UE is implemented, without a need of performing re-attach to the core network device and tracking area update by the UE. In this way, it is ensured that the UE and the base station can switch a transmission solution for further working if capabilities of the UE and the base station do not match.

## Description

### TECHNICAL FIELD

Embodiments of the present invention relate to communications technologies, and in particular, to a method and an apparatus for determining a transmission solution and a device.

### BACKGROUND

With rapid development of wireless communication, an Internet of Things (Internet of Things, IoT) technology emerges, and mainly relates to machine-to-machine (Machine to Machine, M2M) communication and machine type communication (Machine Type Communications, MTC). The M2M is a communication manner in which information and data are transferred between machines by using a wireless network. Most M2M devices are relatively small battery-powered systems, for example, smart metering systems, and need to periodically monitor and report usage of water, electricity, and gas. In MTC services, a small amount of data is transmitted, periodic characteristics are obvious, power consumption is low, and a quantity of terminals is large.

For this type of services in the IoT, currently there are mainly two transmission solutions, namely, a control plane (Control plane, CP) transmission solution and a user plane (User plane, UP) transmission solution. A specific solution used by user equipment (User Equipment, UE) is determined by using a negotiation process between the UE and a core network device during initial attach or tracking area update (Tracking Area Update, TAU). For example, in an attach process, the UE first initiates a random access procedure. After performing access, the UE establishes a radio resource control (Radio Resource Control, RRC) connection to the base station. An attach request carried in an RRC connection setup complete message sent by the UE to the base station indicates, by using network behavior that tends to occur, a capability supported by the UE. The base station sends an initial UE message to the core network device in a form of a non-access stratum (Non-access stratum, NAS) message. The core network device selects a solution for the UE. If the UP solution is selected, the core network device may send the UP solution to the base station by using a NAS message carried in an initial context setup request. The base station sends the selected solution carried in attach accept information carried in an RRC connection reconfiguration message to the UE. If the core network device selects the CP solution, the selected solution may be placed in the NAS message and sent to the base station by using a downlink NAS transport message, and the base station transparently transmits the selected solution to the UE, to complete negotiation of a transmission solution for the UE.

However, in an actual application, if the UE selects another base station during cell reselection due to mobility of the UE when the UE enters an idle mode from a connected mode, and a capability supported by the base station is different from the capability agreed on by the UE and the core network device or if the core network device is already overloaded, the UE cannot work normally when camping on the base station. At present, there is still no suitable solution to the problem.

### SUMMARY

Embodiments of the present invention provide a method and an apparatus for determining a transmission solution and a device, to resolve a problem in an actual application that if UE selects another base station during cell reselection due to mobility of the UE when the UE enters an idle mode from a connected mode and a capability supported by the base station is different from a capability agreed on by the UE and a core network device or if the core network device is already overloaded, the UE cannot work normally when camping on the base station.

A first aspect of the present invention provides a method for determining a transmission solution, including:
obtaining, by a base station, a transmission solution switching instruction of UE, where the transmission solution switching instruction of the UE is used to instruct to switch a transmission solution of the UE from user plane transmission to control plane transmission or from control plane transmission to user plane transmission; and
configuring, by the base station, a switched-to transmission solution with the UE based on the transmission solution switching instruction.

In this solution, the base station is a base station currently connected to the UE. The base station may generate an instruction for instructing to switch the transmission solution of the UE, or may receive an instruction sent by a core network device, or may generate the instruction based on switching of a transmission solution actively triggered by the UE. This is not specifically limited.

According to the method for determining a transmission solution provided in this solution, the base station obtains the transmission solution switching instruction by using statuses of the UE and the base station or the core network device, and configures the switched-to transmission solution with the UE, so that switching of the transmission solution of the UE is implemented, without a need of performing re-attach to the core network device and tracking area update by the UE. In this way, it is ensured that the UE and the base station can switch a transmission solution for further working if capabilities of the UE and the base station do not match.

In a specific implementation, if the transmission solution switching instruction instructs to switch the transmission solution of the UE from user plane transmission to control plane transmission, the configuring, by the base station, a switched-to transmission solution with the UE based on the transmission solution switching instruction includes:
sending, by the base station, a first instruction to the UE, where the first instruction is used to instruct the UE to suspend or release context information used in user plane transmission; and
receiving, by the base station, a context information suspend complete message sent by the UE.

Further, the sending, by the base station, a first instruction to the UE includes:
sending, by the base station, a radio resource control (Radio Resource Control, RRC) connection reconfiguration message to the UE, where the RRC connection reconfiguration message carries the first instruction; or
sending, by the base station, an RRC connection suspend request message to the UE, where the RRC connection suspend request message carries the first instruction.

Optionally, the obtaining, by a base station, a transmission solution switching instruction of UE includes:
receiving, by the base station, an initial context setup request message sent by a core network device, where the initial context setup request message carries the transmission solution switching instruction of the UE; or
receiving, by the base station, a UE context restoration message sent by a core network device, where the UE context restoration message carries the transmission solution switching instruction of the UE; or
receiving, by the base station, a downlink non-access stratum transport message sent by the core network device, where the downlink NAS transport message carries the transmission solution switching instruction of the UE.

The foregoing solutions provide a specific implementation of switching the transmission solution of the UE from user plane transmission to control plane transmission. During switching from user plane transmission to control plane transmission, security setup does not need to be performed. It is only necessary to instruct the UE to suspend or release the context information used in user plane transmission. In this way, if user plane transmission is used again, transmission can be directly performed based on the suspended information, and the context information does not need to be obtained again.

Optionally, if the transmission solution switching instruction instructs to switch the transmission solution of the UE from control plane transmission to user plane transmission, the configuring, by the base station, a switched-to transmission solution with the UE based on the transmission solution switching instruction includes:
sending, by the base station, a security mode command message to the UE;
receiving, by the base station, a security mode complete message sent by the UE;
sending, by the base station, an RRC connection reconfiguration message to the UE, where the RRC connection reconfiguration message carries information for instructing to stop using control plane transmission; and
receiving, by the base station, an RRC connection reconfiguration complete message sent by the UE.

Optionally, the obtaining, by a base station, a transmission solution switching instruction of UE includes:
receiving, by the base station, a NAS message that is sent by the UE and that instructs to use user plane transmission;
forwarding, by the base station, the NAS message to the core network device; and
receiving, by the base station, the transmission solution switching instruction of the UE that is sent by the core network device.

Optionally, the receiving, by the base station, a NAS message that is sent by the UE and that instructs to use user plane transmission includes:
receiving, by the base station, an RRC connection setup complete message sent by the UE, where the RRC connection setup complete message carries the NAS message; and
the forwarding, by the base station, the NAS message to the core network device includes:
   sending, by the base station, an initial UE message to the core network device, where the initial UE message carries the NAS message.

The foregoing solutions provide a specific implementation of switching the transmission solution of the UE from control plane transmission to user plane transmission. During switching from control plane transmission to user plane transmission, the base station needs to establish a security mode with the UE. The base station first initiates a security mode command to the UE, to establish the corresponding security mode with the UE. After the UE returns a security mode setup complete message, the base station then initiates the RRC connection reconfiguration message to the UE, so that user plane transmission is directly used after RRC connection reconfiguration is completed, to implement switching of the transmission solution of the UE. The base station and the UE can switch a transmission solution of the UE for further working when capabilities of the base station and the UE do not match.

In addition, the obtaining, by a base station, a transmission solution switching instruction of UE includes:
receiving, by the base station, a first transmission solution that is sent by the UE and that is agreed on by the UE and a core network device; and
if a second transmission solution supported by the base station is different from the first transmission solution, instructing, by the base station, to switch a transmission solution for the UE.

Optionally, the receiving, by the base station, a first transmission solution that is sent by the UE and that is agreed on by the UE and a core network includes:
receiving, by the base station, an RRC connection setup request message sent by the UE, where the RRC connection setup request message carries the first transmission solution; or
receiving, by the base station, an RRC connection setup complete message sent by the UE, where the RRC connection setup complete message carries the first transmission solution; or
receiving, by the base station, an RRC connection restoration message sent by the UE, where the RRC connection restoration message carries the first transmission solution; or
receiving, by the base station, an RRC restoration complete message sent by the UE, where the RRC restoration complete message carries the first transmission solution.

In the foregoing solutions, the UE indicates a transmission solution agreed on by the UE and the core network device to the base station in an RRC connection request message. When the base station finds that the transmission solution and a transmission solution that is supported by the base station do not match, the base station may use an RRC connection complete message to instruct to switch the transmission solution for the UE. Subsequently, the transmission solution switching instruction of the UE is carried in the initial UE message and sent to the core network device. Optionally, if the UE reports the agreed transmission solution in another message, the base station may use other signaling to instruct the UE to perform switching and send an acknowledgment to the core network device.

Optionally, the obtaining, by a base station, a transmission solution switching instruction of UE includes:
receiving, by the base station, an overload indication sent by a core network device; and
if the overload indication indicates that control plane transmission of the core network device is overloaded, generating, by the base station, the transmission solution switching instruction of the UE, where the transmission solution switching instruction instructs to switch the transmission solution of the UE from control plane transmission to user plane transmission.

In the solution, the core network device may send an overload indication caused by a control plane transmission solution to the base station. When the RRC connection request message that is sent by the UE and that is received by the base station carries an instruction instructing to use the control plane transmission solution, based on the overload indication information, the base station may use the RRC connection complete message to carry the transmission solution switching instruction instructing the UE to switch to a user plane transmission solution, so that in a case of overload, the UE can still switch a transmission solution for further working.

A second aspect of the present invention provides a method for determining a transmission solution. The method is a solution on a side of UE corresponding to the first aspect, and specifically includes:
obtaining, by the UE, a transmission solution switching instruction, where the transmission solution switching instruction is used to instruct to switch a transmission solution of the UE from user plane transmission to control plane transmission or from control plane transmission to user plane transmission; and
configuring, by the UE, a switched-to transmission solution with a base station based on the transmission solution switching instruction.

Optionally, if the transmission solution switching instruction instructs to switch the transmission solution of the UE from user plane transmission to control plane transmission, the configuring, by the UE, a switched-to transmission solution with a base station based on the transmission solution switching instruction includes:
receiving, by the UE, a first instruction sent by the base station, where the first instruction is used to instruct the UE to suspend or release context information used in user plane transmission;
suspending or releasing, by the UE, the context information used in user plane transmission; and
sending, by the UE, a context information suspend complete message to the base station.

Optionally, the receiving, by the UE, a first instruction sent by the base station includes:
receiving, by the UE, an RRC connection reconfiguration message sent by the base station, where the RRC connection reconfiguration message carries the first instruction.

Optionally, if the transmission solution switching instruction instructs to switch the transmission solution of the UE from control plane transmission to user plane transmission, the configuring, by the UE, a switched-to transmission solution with a base station based on the transmission solution switching instruction includes:
receiving, by the UE, a security mode command message sent by the base station;
establishing, by the UE, a security mode, and sending a security mode complete message to the base station;
receiving, by the UE, an RRC connection reconfiguration message sent by the base station, where the RRC connection reconfiguration message carries information for instructing to stop using control plane transmission; and
performing, by the UE, RRC connection configuration, and sending an RRC connection reconfiguration complete message to the base station.

Optionally, the obtaining, by the UE, a transmission solution switching instruction includes:
receiving, by the UE, the transmission solution switching instruction sent by the base station; or
sending, by the UE, an RRC connection setup request message to the base station; and
receiving, by the UE, an RRC connection reject message sent by the base station, and generating the transmission solution switching instruction based on the RRC connection reject message; or
sending, by the UE, an RRC connection setup complete message to the base station; and
receiving, by the UE, an RRC connection release message sent by the base station, and generating the transmission solution switching instruction based on the RRC connection release message.

A third aspect of the present invention provides a method for determining a transmission solution, applied to a side of a core network device, and including:
sending, by the core network device, a first message to a base station, where the first message is used to enable the base station to determine a transmission solution switching instruction of UE, and the transmission solution switching instruction is used to instruct to switch a transmission solution of the UE from user plane transmission to control plane transmission; and
receiving, by the core network device, a transmission solution switching complete message of the UE that is returned by the base station.

Optionally, the sending, by the core network device, a first message to a base station includes:
sending, by the core network device, an initial context setup request message to the base station, where the first message is the initial context setup request message; or
sending, by the core network device, a downlink NAS transport message to the base station, where the first message is the downlink NAS transport message, and the downlink NAS transport message carries the transmission solution switching instruction of the UE.

Optionally, before the sending, by the core network device, a first message to a base station, the method further includes:
receiving, by the core network device, an initial UE message sent by the base station, where the initial UE message includes a BSR of the UE, a DVI, or the transmission solution switching instruction of the UE; or
receiving, by the core network device, an uplink NAS transport message sent by the base station, where the uplink NAS transport message includes a BSR of the UE, a DVI, or the transmission solution switching instruction of the UE.

Optionally, the first information further includes an overload indication, and the overload indication is used to indicate that control plane transmission of the core network device is overloaded.

A fourth aspect of the present invention provides a method for determining a transmission solution, applied to a side of a first base station currently connected to UE, and specifically including:
sending, by the first base station, a handover request message to a second base station, where the handover request message includes a transmission solution used by the UE; and
receiving, by the first base station, a handover acknowledgment message or a handover reject message returned by the second base station.

A fifth aspect of the present invention provides a method for determining a transmission solution, applied to a side of a target base station, that is, a second base station, that is selected by a first base station for UE and to which the UE is to be handed over for connection. A specific solution includes:
receiving, by the second base station, a handover request message sent by the first base station, where the handover request message includes a transmission solution currently used by the UE, and the first base station is a base station currently used by the UE;
determining, by the second base station based on the handover request message, whether access of the UE is allowed;
if the second base station determines that access of the UE is allowed, returning, by the second base station, a handover acknowledgment message to the first base station, or if the second base station determines that access of the UE is not allowed, returning a handover reject message to the first base station.

Optionally, the handover request message further includes transmission capability information of the UE, and the transmission capability information of the UE is used to indicate a transmission solution supported by the UE.

Optionally, the determining, by the second base station based on the handover request message, whether access of the UE is allowed includes:
if a transmission solution supported by the second base station is the same as the transmission solution currently used by the UE, determining that access of the UE is allowed, or if a transmission solution supported by the second base station is the same as the transmission solution currently used by the UE, determining that access of the UE is not allowed.

Optionally, the determining, by the second base station based on the handover request message, whether access of the UE is allowed further includes:
if the transmission solution supported by the UE includes a transmission solution supported by the second base station, determining that access of the UE is allowed; and
the handover acknowledgment message further includes a switching instruction instructing the UE to switch to the transmission solution supported by the second base station.

In the solutions of the fourth aspect and the fifth aspect, for a scenario in which a handover is required, when the UE and a network side use a CP/UP solution to perform communication and the first base station (a source base station) determines to perform a handover operation, the first base station sends a handover request request to the second base station (the target base station). The CP/UP solution to be used is indicated in the handover request message. Optionally, a capability supported by the UE may be indicated. For example, the UE supports only CP or only UP or both CP and UP. A solution that the UE tends to support may be indicated. The two types of information may be placed in uplink and downlink information of the UE, or may be stored as a separate IE. If the second base station allows access and the second base station supports a transmission solution indicated by the first base station, an acknowledgment may be indicated in the handover acknowledgment message. The first base station then sends RRC reconfiguration information to the UE after receiving the handover request acknowledgment message. A solution used by the UE may be indicated in the information.

In addition, if a capability supported by the second base station is inconsistent with a capability that is indicated by the first base station and that is used by the UE and the network side, the second base station may use the handover acknowledgment message sent to the first base station to indicate a solution that the UE needs to use. In other words, the second base station instructs the UE to switch a transmission solution. After receiving the message, the first base station sends the message to the UE by using an RRC connection reconfiguration message. After receiving the RRC connection reconfiguration message, the UE sends an RRC connection reconfiguration complete message to the second base station, to implement switching of a transmission solution.

A fifth aspect of the present invention provides a method for determining a transmission solution, applied to a side of a base station. Before UE and the base station establish a connection, the base station uses a broadcast message to notify, in a broadcast mode, all UEs of a transmission solution supported by the base station, for example, a capability that only control plane transmission is supported or only user plane transmission is supported. When the UE performs cell reselection, if a broadcast message of a cell is read to determine that the base station of the cell and a transmission solution of the UE do not match, the UE directly does not perform access of the transmission solution, and searches for another cell for access or renegotiation, or the UE directly switches a transmission solution.

A sixth aspect of the present invention provides a method for determining a transmission solution. If use of control plane transmission causes overload, a core network device may add an overload cause based on existing signaling. Overload in control plane transmission is added to an overload indication notified to a base station. The base station may use a broadcast message to indicate whether the core network device is overloaded, so that when establishing a connection, UE directly switches a transmission solution or searches for another cell to camp on, or performs renegotiation. The UE uses the broadcast message of the base station that carries the overload indication to perform access control, to avoid connection rejection by the core network device after access. This is simple and efficient.

A seventh aspect of the present invention provides a method for determining a transmission solution. Still, if use of control plane transmission causes overload, a core network device adds an overload cause and then sends an overload indication to a base station. UE sends an RRC connection setup request message carrying use of control plane transmission. When receiving the RRC connection setup request message sent by the UE, the base station may directly perform rejection based on the overload indication of the core network device, and an RRC connection reject message may carry a reject cause, and/or an indication message, and/or a redirection message instructing the UE to reconnect to another base station. The indication message may instruct the UE to switch a transmission solution, or may instruct the UE to back off. The UE backs off based on related parameters in the indication message, to reduce load of the core network device.

An eighth aspect of the present invention provides a method for determining a transmission solution. A core network device sends an overload indication in which a cause is overload in control plane transmission to a base station. UE sends an RRC connection request message of using a control plane transmission solution to the base station. The base station then uses an RRC connection setup message to carry a transmission solution switching instruction based on the overload indication information, to instruct the UE to switch to a user plane transmission solution and notify the core network device by using an initial UE message. If the UE does not support user plane transmission, a connection is released. The base station instructs, based on an overload cause of the core network device, the UE to switch a transmission solution, thereby reducing load of the core network device.

A ninth aspect of the present invention provides a method for determining a transmission solution. In the solution, because control plane transmission is overloaded, a core network device may trigger an S1 release procedure for UE in a connected mode, and use an RRC connection restoration message to instruct the UE to perform tracking area update, so that when selecting a core network device, a base station may select another core network device, to implement load balance between core network devices.

A tenth aspect of the present invention provides a method for determining a transmission solution. In the solution, a base station selects a new core network device for UE based on an instruction of a core network device. Specifically, core network devices may interact with each other, to select one core network device that also supports a control plane transmission solution, and send the selected core network device to the base station to perform rerouting, to reduce load of the original core network device.

An eleventh aspect of the present invention provides an apparatus for determining a transmission solution, including:
a receiving module for receiving a message, a sending module for sending a message, and a processing module for controlling execution of a program instruction, where
the receiving module is configured to obtain a transmission solution switching instruction of UE, where the transmission solution switching instruction of the UE is used to instruct to switch a transmission solution of the UE from user plane transmission to control plane transmission or from control plane transmission to user plane transmission; and
the processing module is configured to configure a switched-to transmission solution with the UE based on the transmission solution switching instruction.

The apparatus for determining a transmission solution may be implemented by software, or may be implemented by a hardware device. The receiving module may be implemented as a receiver, and the sending module may be specifically implemented as a transmitter. The processing module may be implemented as a processor, and is configured to perform the technical solution of the base station in any one of the foregoing solutions.

A twelfth aspect of the present invention provides an apparatus for determining a transmission solution, including:
a receiving module for receiving a message, a sending module for sending a message, and a processing module for controlling execution of a program instruction, where
the receiving module is configured to obtain a transmission solution switching instruction, where the transmission solution switching instruction is used to instruct to switch a transmission solution of the apparatus for determining a transmission solution from user plane transmission to control plane transmission or from control plane transmission to user plane transmission; and
the processing module is configured to configure a switched-to transmission solution with a base station based on the transmission solution switching instruction.

The apparatus for determining a transmission solution may be implemented by software, or may be implemented by a hardware device. The receiving module may be implemented as a receiver, and the sending module may be specifically implemented as a transmitter. The processing module may be implemented as a processor, and is configured to perform the technical solution of the user equipment in any one of the foregoing solutions.

A thirteenth aspect of the present invention provides an apparatus for determining a transmission solution, including:
a receiving module for receiving a message, a sending module for sending a message, and a processing module for controlling execution of a program instruction, where
the sending module is configured to send a first message to a base station, where the first message is used to enable the base station to determine a transmission solution switching instruction of UE, and the transmission solution switching instruction is used to instruct to switch a transmission solution of the UE from user plane transmission to control plane transmission; and
the receiving module is configured to receive a transmission solution switching complete message of the UE that is returned by the base station.

The apparatus for determining a transmission solution may be implemented by software, or may be implemented by a hardware device. The receiving module may be implemented as a receiver, and the sending module may be specifically implemented as a transmitter. The processing module may be implemented as a processor, and is configured to perform the technical solution of the core network device in any one of the foregoing solutions.

A fourteenth aspect of the present invention provides a base station, including: a memory storing a program instruction, a processor for controlling execution of the program instruction, a receiver for receiving a message, and a transmitter for sending a message, where
the processor is configured to:
obtain a transmission solution switching instruction of UE, where the transmission solution switching instruction of the UE is used to instruct to switch a transmission solution of the UE from user plane transmission to control plane transmission or from control plane transmission to user plane transmission; and
configure a switched-to transmission solution with the UE based on the transmission solution switching instruction.

A fifteenth aspect of the present invention provides UE, including: a memory storing a program instruction, a processor for controlling execution of the program instruction, a receiver for receiving a message, and a transmitter for sending a message, where
the processor is configured to:
obtain a transmission solution switching instruction, where the transmission solution switching instruction is used to instruct to switch a transmission solution of the UE from user plane transmission to control plane transmission or from control plane transmission to user plane transmission; and
configure a switched-to transmission solution with a base station based on the transmission solution switching instruction.

A sixteenth aspect of the present invention provides a core network device, including: a memory storing a program instruction, a processor for controlling execution of the program instruction, a receiver for receiving a message, and a transmitter for sending a message, where
the transmitter is configured to send a first message to a base station, where the first message is used to enable the base station to determine a transmission solution switching instruction of UE, and the transmission solution switching instruction is used to instruct to switch a transmission solution of the UE from user plane transmission to control plane transmission; and
the receiver is configured to receive a transmission solution switching complete message of the UE that is returned by the base station.

According to the method and the apparatus for determining a transmission solution and the device provided in the present invention, the base station obtains the transmission solution switching instruction by using statuses of the UE and the base station or the core network device, and configures the switched-to transmission solution with the UE, so that switching of the transmission solution of the UE is implemented, without a need of performing re-attach to the core network device and tracking area update by the UE. In this way, it is ensured that the UE and the base station can switch a transmission solution for further working if capabilities of the UE and the base station do not match.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic diagram of an application scenario of a method for determining a transmission solution according to the present invention;
FIG. 2 is a flowchart of Embodiment 1 of a method for determining a transmission solution according to the present invention;
FIG. 3 is a flowchart of Embodiment 2 of a method for determining a transmission solution according to the present invention;
FIG. 4 is a flowchart of Embodiment 3 of a method for determining a transmission solution according to the present invention;
FIG. 5 is a schematic interaction diagram of Example 1 of a method for determining a transmission solution according to the present invention;
FIG. 6 is a schematic interaction diagram of Example 2 of a method for determining a transmission solution according to the present invention;
FIG. 7 is a flowchart of Embodiment 4 of a method for determining a transmission solution according to the present invention;
FIG. 8 is a schematic interaction diagram of Example 3 of a method for determining a transmission solution according to the present invention;
FIG. 9 is a schematic interaction diagram of Example 6 of a method for determining a transmission solution according to the present invention;
FIG. 10 is a schematic structural diagram of Embodiment 1 of an apparatus for determining a transmission solution according to the present invention;
FIG. 11 is a schematic structural diagram of Embodiment 2 of an apparatus for determining a transmission solution according to the present invention; and
FIG. 12 is a schematic structural diagram of Embodiment 3 of an apparatus for determining a transmission solution according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

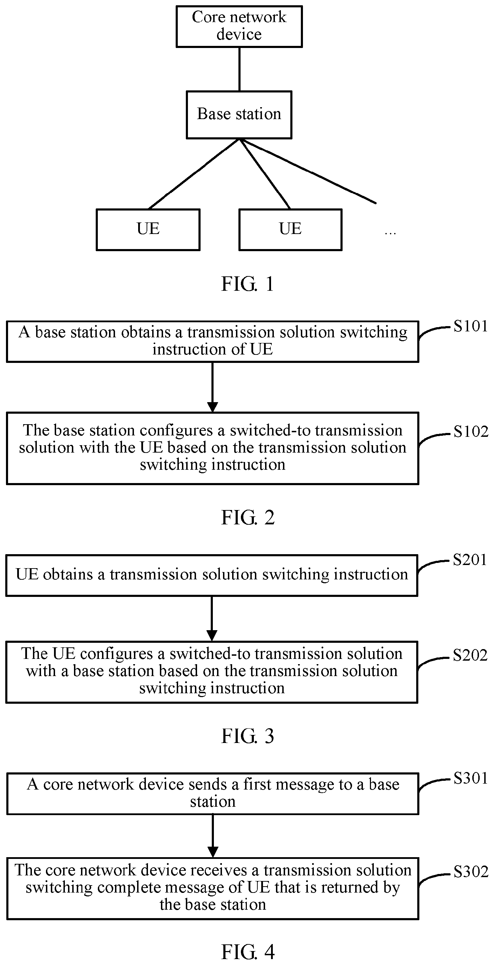

FIG. 1 is a schematic diagram of an application scenario of a method for determining a transmission solution according to the present invention. The solution in the present invention may be applied to a wireless communications system with large network coverage and a large quantity of connections. As shown in FIG. 2, the solution is mainly applied to a system supporting M2M communication, and network elements include user equipment (User Equipment, UE), a base station, and a core network device.

The UE herein is a terminal device that supports a communication type such as M2M, enhanced machine type communication (enhanced Machine Type Communications, EMTC), narrowband IoT, or Long Term Evolution (Long Term Evolution, LTE). The base station is used to connect the UE and the core network device, and may be an evolved NodeB, a base station, an Internet of Things base station, or the like. The core network device may include a serving gateway node (CIoT Serving Gateway Node, C-SGN), a mobility management entity (Mobility Management Entity, MME), a serving gateway (Serving GateWay, S-GW), a PDN gateway (PDN GateWay, P-GW), and the like.

In the foregoing system architecture, when the UE enters an idle mode from a connected mode, the UE may select another base station during cell reselection due to mobility. A capability supported by the selected base station may be inconsistent with a capability agreed on by the UE and the core network device. In this case, the UE cannot work normally. For example, the UE and the MME agree to use a UP solution. The UE in an idle mode selects a cell of a base station that supports only a CP capability to camp on. In a second scenario, when the MME is overloaded because use of a CP solution, the MME needs to prohibit the use of the CP solution or enable the UE to switch to the UP solution. In addition, in some scenarios, for example, based on a service requirement, the UE needs to perform CP/UP switching. When a service creation environment function (Service Creation Environment Function, SCEF) needs to be connected, only the CP solution can be used. For the foregoing problem and application scenarios, related solutions of CP/UP switching are described in the present invention, to resolve a problem that the UE cannot work normally when capabilities of the UE and the base station do not match.

FIG. 2 is a flowchart of Embodiment 1 of a method for determining a transmission solution according to the present invention. As shown in FIG. 2, the solution is performed by a base station. Specific implementation steps of the method for determining a transmission solution are as follows:
S101: The base station obtains a transmission solution switching instruction of UE.

In this step, the transmission solution switching instruction of the UE is used to instruct to switch a transmission solution of the UE from user plane transmission to control plane transmission or from control plane transmission to user plane transmission. In other words, the transmission solution switching instruction is used to instruct to switch the transmission solution of the UE, or may instruct to determine a transmission solution again. The transmission solution switching instruction may be determined and generated by the base station based on a transmission solution currently used by the UE and performance of the base station, or may be received from a core network device (for example, an MME), or may be generated based on switching of a transmission solution actively triggered by the UE. A specific manner is not limited.

S102: The base station configures a switched-to transmission solution with the UE based on the transmission solution switching instruction.

In this solution, when switching directions of transmission solutions are different, configuration processes of the UE and the base station are different. If the transmission solution switching instruction instructs to switch the transmission solution of the UE from user plane transmission to control plane transmission, a specific process in which the base station configures a switched-to transmission solution with the UE based on the transmission solution switching instruction is: sending, by the base station, a first instruction to the UE, where the first instruction is used to instruct the UE to suspend or release context information used in user plane transmission; and receiving, by the base station, a context information suspend complete message sent by the UE.

To be specific, after the base station determines the transmission solution switching instruction, the base station may send a downlink message to the UE, and add an instruction, namely, the first instruction, to the message. The instruction is used to instruct the UE to suspend or release context information in a user plane transmission solution. When the base station receives a context information suspend complete or release complete message returned by the UE, a configuration process is completed, and a control plane transmission solution can be directly used. Optionally, the base station may directly send the first instruction without adding the first instruction to a message.

Optionally, several manners of sending the first instruction are provided below:
In Manner 1, the base station sends a radio resource control RRC connection reconfiguration message to the UE, where the RRC connection reconfiguration message carries the first instruction.
In Manner 2, the base station sends an RRC connection suspend request message to the UE, where the RRC connection suspend request message carries the first instruction.

Further, in a process in which the transmission solution is switched from a user plane to a control plane, the base station obtains the transmission solution switching instruction of the user equipment UE in at least the following several specific manners: In Manner 1, the base station receives an initial context setup request message sent by a core network device, where the initial context setup request message carries the transmission solution switching instruction of the UE. In Manner 2, the base station receives a UE context restoration message sent by a core network device, where the UE context restoration message carries the transmission solution switching instruction of the UE. In Manner 3, the base station receives a downlink non-access stratum transport message sent by the core network device, where the downlink non-access stratum (Non-Access Stratum, NAS) transport message carries the transmission solution switching instruction of the UE.

If the transmission solution switching instruction instructs to switch the transmission solution of the UE from control plane transmission to user plane transmission, a specific process in which the base station configures a switched-to transmission solution with the UE based on the transmission solution switching instruction is:
sending, by the base station, a security mode command message to the UE; receiving, by the base station, a security mode complete message sent by the UE; sending, by the base station, an RRC connection reconfiguration message to the UE, where the RRC connection reconfiguration message carries information for instructing to stop using control plane transmission; and receiving, by the base station, an RRC connection reconfiguration complete message sent by the UE.

A meaning of the foregoing procedure is as follows: After the base station determines that the transmission solution of the UE needs to be switched, in other words, after the transmission solution switching instruction is obtained, the base station initiates a security mode command to the UE to perform security setup. After receiving the message, the UE sends the security mode complete message to the base station to complete security setup. The base station sends the RRC connection reconfiguration message to the UE again to establish an SRB 2, a DRB, or the like. Then the UE sends the RRC connection reconfiguration complete message to the base station, to complete a configuration process of switching the transmission solution to perform the user plane transmission solution.

A specific manner in which the base station obtains a transmission solution switching instruction of UE for switching the control plane transmission solution to the user plane transmission solution is: receiving, by the base station, a NAS message that is sent by the UE and that instructs to use user plane transmission; forwarding, by the base station, the NAS message to the core network device; and receiving, by the base station, the transmission solution switching instruction of the UE that is sent by the core network device.

A specific manner of receiving, by the base station, a NAS message that is sent by the UE and that instructs to use user plane transmission is: receiving, by the base station, an RRC connection setup complete message sent by the UE, where the RRC connection setup complete message carries the NAS message; and a specific manner of forwarding, by the base station, the NAS message to the core network device is: sending, by the base station, an initial UE message to the core network device, where the initial UE message carries the NAS message.

According to the method for determining a transmission solution provided in this embodiment, the base station obtains the transmission solution switching instruction by using statuses of the UE and the base station or the core network device, and configures the switched-to transmission solution with the UE, so that switching of the transmission solution of the UE is implemented, without a need of performing re-attach to the core network device and tracking area update by the UE. In this way, it is ensured that the UE and the base station can switch a transmission solution for further working if capabilities of the UE and the base station do not match. Moreover, the NAS message may be used to send an instruction, so that signaling overheads can be reduced.

FIG. 3 is a flowchart of Embodiment 2 of a method for determining a transmission solution according to the present invention. As shown in FIG. 3, the solution is performed by a base station. Specific implementation steps of the method for determining a transmission solution are as follows:
S201: UE obtains a transmission solution switching instruction.

In this step, the transmission solution switching instruction is used to instruct to switch a transmission solution of the UE from user plane transmission to control plane transmission or from control plane transmission to user plane transmission. The transmission solution switching instruction is obtained by using at least the following several implementations:
In Implementation 1, the UE receives the transmission solution switching instruction sent by the base station.
In Implementation 2, the UE sends an RRC connection setup request message to the base station; and the UE receives an RRC connection reject message sent by the base station, and generates the transmission solution switching instruction based on the RRC connection reject message.
In Implementation 3, the UE sends an RRC connection setup complete message to the base station; and the UE receives an RRC connection release message sent by the base station, and generates the transmission solution switching instruction based on the RRC connection release message.

S202: The UE configures a switched-to transmission solution with the base station based on the transmission solution switching instruction.

In this step, the UE may receive the transmission solution switching instruction sent by the base station, in other words, may obtain the transmission solution switching instruction based on overload information of a core network device in received broadcast information. After the UE determines that switching of the transmission solution needs to be received, processing manners are different for different switching directions. Details are as follows:

If the transmission solution switching instruction instructs to switch the transmission solution of the UE from user plane transmission to control plane transmission, a specific implementation in which the UE configures a switched-to transmission solution with the base station based on the transmission solution switching instruction is:
receiving, by the UE, a first instruction sent by the base station, where the first instruction is used to instruct the UE to suspend or release context information used in user plane transmission; suspending or releasing, by the UE, the context information used in user plane transmission; and sending, by the UE, a context information suspend complete message or a release complete message to the base station. The first instruction may alternatively be carried in another message. This is not specifically limited.

The UE may receive the first instruction by receiving an RRC connection reconfiguration message sent by the base station, where the RRC connection reconfiguration message carries the first instruction.

Optionally, if the transmission solution switching instruction instructs to switch the transmission solution of the UE from control plane transmission to user plane transmission, a specific implementation in which the UE configures a switched-to transmission solution with the base station based on the transmission solution switching instruction may be:
receiving, by the UE, a security mode command message sent by the base station; establishing, by the UE, a security mode, and sending a security mode complete message to the base station; receiving, by the UE, an RRC connection reconfiguration message sent by the base station, where the RRC connection reconfiguration message carries information for instructing to stop using control plane transmission; and performing, by the UE, RRC connection configuration, and sending an RRC connection reconfiguration complete message to the base station.

According to the method for determining a transmission solution provided in this embodiment, the UE obtains the transmission solution switching instruction by using other information received by the base station, and configures the switched-to transmission solution with the base station, so that switching of the transmission solution of the UE is implemented, without a need of performing re-attach to the core network device and tracking area update by the UE. In this way, it is ensured that the UE and the base station can switch a transmission solution for further working if capabilities of the UE and the base station do not match. Moreover, a NAS message may be used to send an instruction, so that signaling overheads can be reduced.

FIG. 4 is a flowchart of Embodiment 3 of a method for determining a transmission solution according to the present invention. As shown in FIG. 4, the solution is performed by a core network device. Specific implementation steps of the method for determining a transmission solution are as follows:
S301: The core network device sends a first message to a base station.

In this step, the first message is used to enable the base station to determine a transmission solution switching instruction of UE, and the transmission solution switching instruction is used to instruct to switch a transmission solution of the UE from user plane transmission to control plane transmission.

The core network device may directly send an instruction to the base station to instruct the UE to switch the transmission solution, or may send overload information or other information to the base station to enable the base station to determine the transmission solution switching instruction of the UE. Several specific cases of sending the first message may be specifically as follows:
In Manner 1, the core network device sends an initial context setup request message to the base station.
   In this case, the first message is the initial context setup request message. After receiving the initial context setup request message, because the initial context does not need to be established for user plane transmission, the base station may determine that the core network device instructs to use a control plane transmission solution. If the UE originally uses control plane transmission, no switching is required. If a user uses user plane transmission, the base station generates a switching instruction to instruct the user to switch to control plane transmission.
In Manner 2, the core network device sends a downlink non-access stratum NAS transport message to the base station. In this case, the first message is the downlink NAS transport message, and the downlink NAS transport message carries the transmission solution switching instruction of the UE.

Optionally, the first information further includes an overload indication, and the overload indication is used to indicate that control plane transmission of the core network device is overloaded, so that the base station instructs, based on the overload indication, the UE to switch to user plane transmission, and generates the corresponding transmission solution switching instruction.

S302: The core network device receives a transmission solution switching complete message of the UE that is returned by the base station.

In this step, when completing configuration of a switched-to transmission solution with the UE, the base station needs to send a report to a core network. The base station can send the transmission solution switching complete message to notify the core network device that switching is completed.

In the solution, optionally, before the core network device sends the first message to the base station, the core network device receives an initial UE message sent by the base station, where the initial UE message includes a buffer status report (Buffer Status Report, BSR) of the UE, a data volume indication (Data Volume Indication, DVI), or the transmission solution switching instruction of the UE.

Optionally, before the core network device sends the first message to the base station, the core network device receives an uplink NAS transport message sent by the base station, where the uplink NAS transport message includes a BSR of the UE, a DVI, or the transmission solution switching instruction of the UE.

A meaning of the foregoing procedure is as follows: The base station may use the BSR and/or the DVI to indicate the transmission solution of the UE to the core network device.

According to the method for switching a transmission solution provided in this embodiment, the core network device sends information such as a switching instruction or the overload information or the context setup request message to the base station, to notify the base station that the transmission solution of the UE needs to be switched. The base station and the UE complete configuration of the switched-to transmission solution based on the transmission solution switching instruction, so that switching of the transmission solution of the UE is implemented. In this way, it is ensured that the UE and the base station can switch a transmission solution for further working if capabilities of the UE and the base station do not match.

With reference to the descriptions of the foregoing embodiments, UE, an eNB, and an MME (as a specific example of a core network device) are used as an example below to describe in detail a process of switching a transmission solution of the UE.

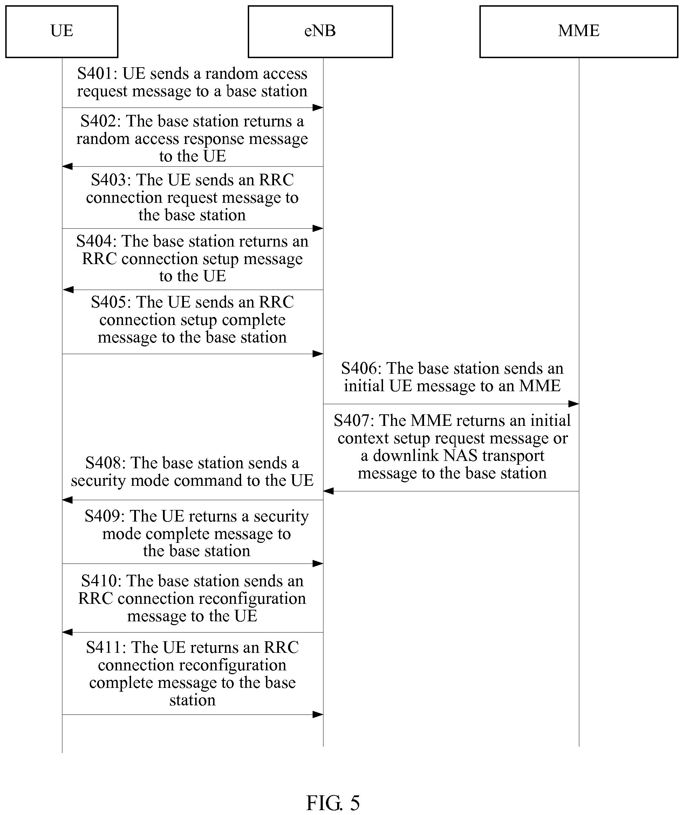

FIG. 5 is a schematic interaction diagram of Example 1 of a method for determining a transmission solution according to the present invention. A scenario of switching to a UP solution when UE and an MME agree to use a CP solution is as follows: During a previous connection, the UE and the MME agree to use the CP solution. After the UE enters an idle mode, a NAS layer of the UE determines to use the UP solution. As shown in FIG. 5, specific implementation steps in which the UE switches from control plane transmission to user plane transmission are as follows:
S401: The UE sends a random access request message to a base station.
S402: The base station returns a random access response message to the UE.

In the foregoing steps, the UE sends the random access request (Random access Request) message to the base station (eNB). As a response, the base station sends the random access response (Random access Response) message to the UE.

S403: The UE sends an RRC connection request message to the base station.

In this step, the UE sends the RRC connection request (RRC Connection Request) message to the eNB. The RRC connection request message includes a SEA-temporary mobile subscriber identity (SAE-temporary mobile subscriber identity, S- TMSI).
S404: The base station returns an RRC connection setup message to the UE.
S405: The UE sends an RRC connection setup complete message to the base station.

In the foregoing steps, after receiving the message, the UE sends the RRC connection setup complete (RRC Connection Setup Complete) message. In a specific implementation, the RRC connection setup complete message may carry a NAS message, where the NAS message includes data, namely, a NAS PDU. Optionally, the RRC connection setup complete message may carry a service request (Service Request, SR) or an extended service request (Extended Service Request, ESR), and one instruction is added to the RRC connection setup complete message. The instruction instructs the UE to use a UP solution. Specifically, the instruction may be represented by 1 bit. That is, the UE triggers to switch a transmission solution from control plane transmission to user plane transmission.

S406: The base station sends an initial UE message to the MME.

Two different triggering manners, that is, parallel solutions, are provided in steps S406 and S405. In a specific implementation, either manner may be selected for implementation.

In step S406, after receiving the message, the eNB may send the NAS message to the MME by using the initial UE message. Optionally, the initial UE message may include a data volume indication sent by the base station to the MME, or the base station indicates solution switching to the MME based on a BSR or a DVI reported by the UE to the base station, or the UE indicates switching to the MME by using the NAS message. Alternatively, the MME determines to switch to the UP solution.

S407: The MME returns an initial context setup request message or a downlink NAS transport message to the base station.

In this step, it is assumed that the base station supports both a CP solution and the UP solution, and the MME and the base station may know a capability supported by each other by using specific signaling or an operation, administration and maintenance (operation, administration and maintenance, OAM) configuration. After determining, based on other information such as specific indication information or a specific load status, to use the UP solution, the MME sends the initial context setup request message or the downlink NAS transport message to the base station for indication.

S408: The base station sends a security mode command to the UE.

In this step, after receiving the message sent by the MME, the base station initiates the security mode command (Security Mode Command, SMC) to the UE to perform security setup.

S409: The UE returns a security mode complete message to the base station.

In this step, after receiving the message, the UE sends the security mode complete message to the base station, and security setup is completed.

S410: The base station sends an RRC connection reconfiguration message to the UE.

In this step, the base station sends the RRC connection reconfiguration (RRC Connection Reconfiguration) message to the UE, to establish a signaling radio bearer (signaling radio bearer, SRB 2), a data radio bearer (Data Radio Bearer, DRB), or the like.

S411: The UE returns an RRC connection reconfiguration complete message to the base station.

In this step, the UE sends the RRC connection reconfiguration complete (RRC Connection Reconfiguration Complete) message to the base station. Configuration is completed, and the UP solution is used.

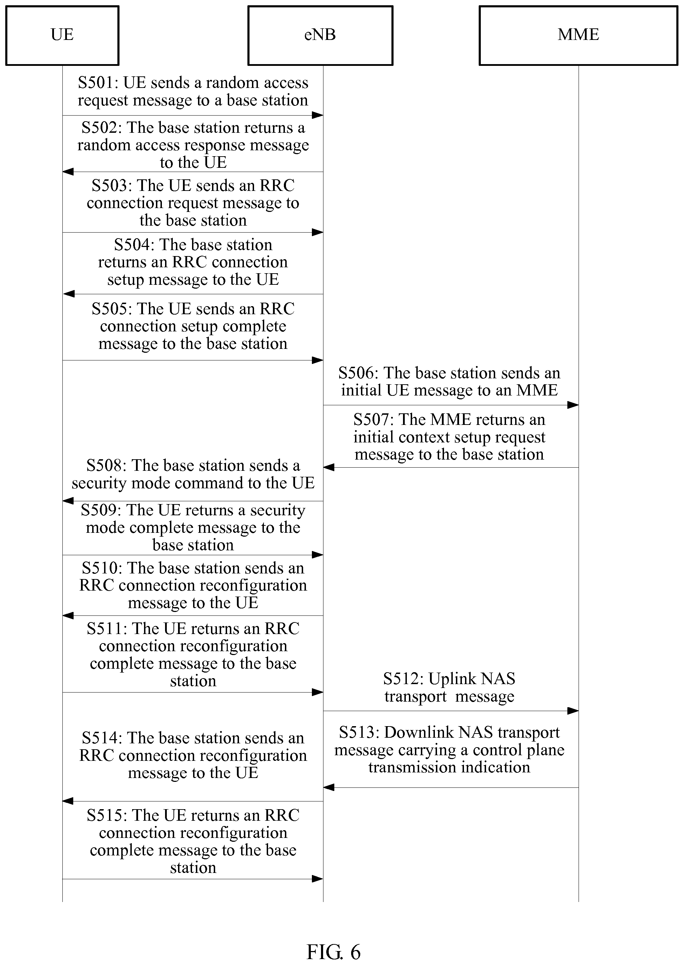

FIG. 6 is a schematic interaction diagram of Example 2 of a method for determining a transmission solution according to the present invention, As shown in FIG. 6, when UE is in a connected mode, specific implementation steps in which the UE switches from a UP solution to a CP solution are as follows:
S501: The UE sends a random access request message to a base station.
S502: The base station returns a random access response message to the UE.

In the foregoing steps, the UE sends the random access request (Random access Request) message to the base station (eNB). As a response, the base station sends the random access response (Random access Response) message to the UE.
S503: The UE sends an RRC connection request message to the base station.
S504: The base station returns an RRC connection setup message to the UE.
S505: The UE sends an RRC connection setup complete message to the base station.

In the foregoing steps, the UE sends the RRC connection request (RRC Connection Request) message to the eNB. The RRC connection request message includes an S-TMSI. The eNB sends the RRC connection setup (RRC Connection Setup) message to the UE. After receiving the message, the UE sends the RRC connection setup complete (RRC Connection Setup Complete) message, to complete RRC connection setup.
S506: The base station sends an initial UE message to an MME.
S507: The MME returns an initial context setup request message to the base station.
S508: The base station sends a security mode command to the UE.
S509: The UE returns a security mode complete message to the base station.
S510: The base station sends an RRC connection reconfiguration message to the UE.
S511: The UE returns an RRC connection reconfiguration complete message to the base station.

The SMC and reconfiguration are completed by using the foregoing steps.

Subsequently, optionally, the UE may send the message to the base station by using an uplink message. The message may include a BSR/DVI. Such information may alternatively be included in a NAS message.

S512: Uplink NAS transport message.

In this step, after receiving the message, the eNB may send the NAS message to the MME by using an initial UE message (Initial UE Message) or an uplink NAS transport (NAS Transport) message. The message may include a data volume indication sent by the base station to the MME, or the base station indicates solution switching to the MME based on a BSR/DVI reported by the UE to the base station, or the UE indicates switching to the MME by using the NAS message. Alternatively, the MME determines to switch to a CP solution.

S513: Downlink NAS transport message carrying a control plane transmission indication.

In this step, S512 and S513 are two parallel solutions, and either S512 or S513 may be performed. S512 is switching triggered by the base station, and S513 is switching triggered by the MME.

In S513, when the MME triggers switching to the CP solution, the MME may send an instruction to the base station by using the downlink NAS transport (Downlink NAS Transport) message. The downlink NAS transport message includes indication information. When there is downlink data, the downlink data may be directly carried in the signaling.

In the solution, optionally, when a NAS layer of the UE determines to switch from a UP solution to the CP solution in a connected mode, an implementation is as follows: The UE adds one instruction (the same as that in the foregoing embodiments) to an SR or an ESR and sends the SR or the ESR to the base station. The instruction instructs to switch to the CP solution. The base station forwards the instruction to the MME. Another implementation is as follows: The UE directly sends an uplink direct transfer message to the base station, where a NAS PDU carries an evolved packet system bearer indication (evolved packet system Bearer Indication, EBI). The EBI may correspond to a default bearer or may correspond to a previous DRB or is obtained in another manner. The base station forwards the message to the MME by using an uplink NAS transport message.

For the foregoing two implementations, the MME may send an instruction instructing to use the CP solution to the base station by using a downlink NAS transport message. The base station sends an indication message to the UE through downlink message direct transfer. In this case, the CP solution can be used to send data. If there is downlink data, the downlink data can be directly transmitted by using a NAS, or no additional instruction may be sent.

S514: The base station sends an RRC connection reconfiguration message to the UE.

In this step, if the base station receives the solution switching instruction, the base station may send the RRC connection reconfiguration (RRC Connection Reconfiguration) message to the UE. One instruction is added to the message. The instruction is used to instruct to release or suspend information such as a DRB that needs to be used in the UP solution.

S515: The UE returns an RRC connection reconfiguration complete message to the base station.

In this step, the UE sends the RRC connection reconfiguration complete (RRC Connection Reconfiguration Complete) message to the base station. Configuration is completed, and the CP solution is used. Optionally, a context of the UE that is required in the UP solution may be suspended at the UE. After receiving the message, the base station may suspend the context of the UE that needs to be used in the UP solution. Alternatively, a UP connection may be directly released.

An optional solution parallel to S514 and S515 is as follows: The base station may send a suspend signaling instruction, for example, an RRC connection suspend request (RRC Connection Suspend Request) message to the UE, to suspend information such as a DRB. The UE returns an RRC connection suspend complete (RRC Connection Suspend complete) message to the base station. A suspend process is optional. Suspension or release may alternatively be performed in the end by using connection release signaling.

AS security is activated to complete the foregoing configuration of the CP solution. Optionally, if AS security is not required, operations such as security deactivation or security context release may be performed in a reconfiguration message or another message.

In the foregoing two examples, in the process in which the UE switches a transmission solution, the UE does not need to perform re-attach to the MME or perform tracking area update to negotiate about a transmission solution. The transmission solution is directly switched based on an instruction and information carried in a transport message, so that a problem that capabilities do not match is resolved.

Based on the foregoing two switching solutions, in a specific application scenario, the UE and the MME agree on the UP solution, and after cell reselection of the UE, the base station of a cell that the UE camps on supports only the CP capability. In this case, the following two implementations may be further included:

In Manner 1, the UE sends an RRC connection request (RRC Connection Request) message to the base station, where the RRC connection request message carries a UP solution indication (UP preferred) that is previously agreed on by the UE and the MME. After receiving the information, the base station finds that a capability of the UE and a capability of the base station do not match. The base station sends an RRC connection reject (RRC Connection Reject) message to the UE, where the RRC connection reject message carries a new reject cause or redirection information. In other words, the base station directly rejects connection of the UE, and returns the RRC connection reject message to the UE. The base station may obtain capability information of another base station by using an X2 interface, and may use a redirection message to send information about a base station supporting the capability information or a cell of the base station to the UE. The information is carried in the redirection information.

In Manner 2, the UE sends an RRC connection setup complete (RRC Connection Setup Complete) message to the base station, where the RRC connection setup complete message carries a UP solution indication (UP preferred) previously agreed on by the UE and the MME. After receiving the information, the base station finds that a capability of the UE and a capability of the base station do not match, and sends an RRC connection release message to the UE, where the RRC connection release message carries a new reject cause or redirection information. The base station may obtain capability information of another base station by using an X2 interface, and may use a redirection message to send information about a base station supporting the capability information or a cell of the base station to the UE. The information is carried in the redirection information.

In an optional solution, the base station directly rejects connection of the UE, or uses the redirection message to directly indicate the base station that the UE can access, to avoid a problem that capabilities still do not match during another time of selection.

In a same scenario as that in the foregoing optional solution, the UE uses an RRC connection request (Connection Request) message to indicate the previously agreed UP solution to the base station. The base station finds that a capability of the UE and a capability of the base station do not match. In this case, an RRC connection setup (Connection Setup) message is used to instruct the UE to switch to the CP solution. Subsequently, the initial UE message is used to send an indication message instructing to switch a solution to the MME.

Similarly, if the UE makes a report in an RRC connection setup complete (Connection Setup Complete) message, the base station may use additional signaling to instruct the UE to perform switching, and send an acknowledgment to the MME.

Optionally, after the base station performs the instruction, re-attach to the MME or tracking area update performed by the UE may be triggered to perform renegotiation.

Optionally, it can be learned, with reference to any one of the foregoing implementation solutions, that to obtain a transmission solution switching instruction of the UE, the base station may further receive a first transmission solution that is sent by the UE and that is agreed on by the UE and a core network device. Next, when the base station determines that a second transmission solution supported by the base station is different from the first transmission solution, the base station instructs to switch a transmission solution for the UE. The base station may directly send the transmission solution switching instruction to the UE.

In this manner, a specific implementation in which the base station receives a first transmission solution that is sent by the UE and that is agreed on by the UE and a core network includes:
receiving, by the base station, an RRC connection setup request message sent by the UE, where the RRC connection setup request message carries the first transmission solution; or receiving, by the base station, an RRC connection setup complete message sent by the UE, where the RRC connection setup complete message carries the first transmission solution; or receiving, by the base station, an RRC connection restoration message sent by the UE, where the RRC connection restoration message carries the first transmission solution; or receiving, by the base station, an RRC restoration complete message sent by the UE, where the RRC restoration complete message carries the first transmission solution.

In the foregoing solution, the base station directly instructs the UE to switch a transmission solution, thereby effectively reducing signaling overheads.

Optionally, in a same scenario as that in the foregoing solution, the UE may alternatively not report a CP/UP indication to the base station. After receiving the initial UE message, the MME knows a capability previously agreed on by the UE. When finding that a base station selected by the MME does not support this capability, the MME notifies the base station by using a downlink S1 message (an initial message or a downlink NAS message). The base station releases a connection, and provides a cause value and a redirection message, to trigger the UE to switch a transmission solution or access another base station.

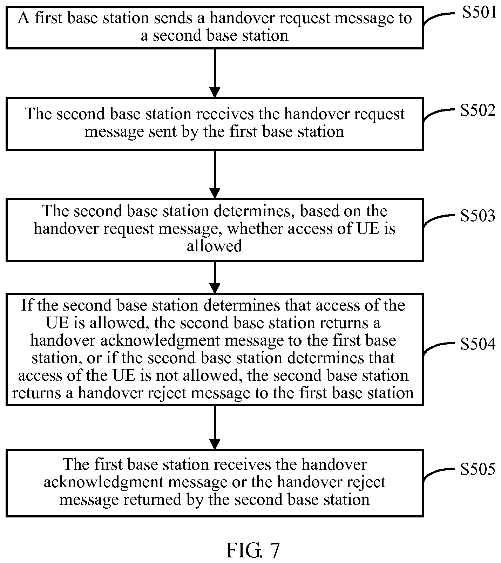

FIG. 7 is a flowchart of Embodiment 4 of a method for determining a transmission solution according to the present invention. As shown in FIG. 7, the solution is performed by a first base station currently connected to UE and another base station such as a second base station. When the UE determines to access the another base station, the first base station and the second base station interact with each other. A specific process of the method is as follows:
S601: The first base station sends a handover request message to the second base station.

In this step, when it is determined to hand over the UE from the first base station to the second base station, the handover request message includes a transmission solution used by the UE.

S602: The second base station receives the handover request message sent by the first base station.

The handover request message includes the transmission solution currently used by the user equipment UE. The first base station is a base station currently used by the UE.

Optionally, the handover request message further includes transmission capability information of the UE, and the transmission capability information of the UE is used to indicate a transmission solution supported by the UE.

S603: The second base station determines, based on the handover request message, whether access of the UE is allowed.

In this step, a specific implementation is: if a transmission solution supported by the second base station is the same as the transmission solution currently used by the UE, determining that access of the UE is allowed, or if a transmission solution supported by the second base station is different from the transmission solution currently used by the UE, determining that access of the UE is not allowed.

Optionally, the UE supports both CP transmission and UP transmission. In this case, access is still allowed if the transmission solution supported by the second base station is different from the transmission solution currently used by the UE. Only an instruction instructing the UE to use the transmission solution supported by the second base station needs to be carried in a returned handover acknowledgment message.

If the transmission solution supported by the UE includes the transmission solution supported by the second base station, access of the UE is allowed. The handover acknowledgment message further includes a switching instruction instructing the UE to switch to the transmission solution supported by the second base station.
S604: If the second base station determines that access of the UE is allowed, the second base station returns a handover acknowledgment message to the first base station, or if the second base station determines that access of the UE is not allowed, the second base station returns a handover reject message to the first base station.
S605: The first base station receives the handover acknowledgment message or the handover reject message returned by the second base station.

With reference to the foregoing implementation steps, UE, a source base station (equivalent to the first base station), and a target base station (equivalent to the second base station) are used as an example below to describe in detail a specific process of the implementation.

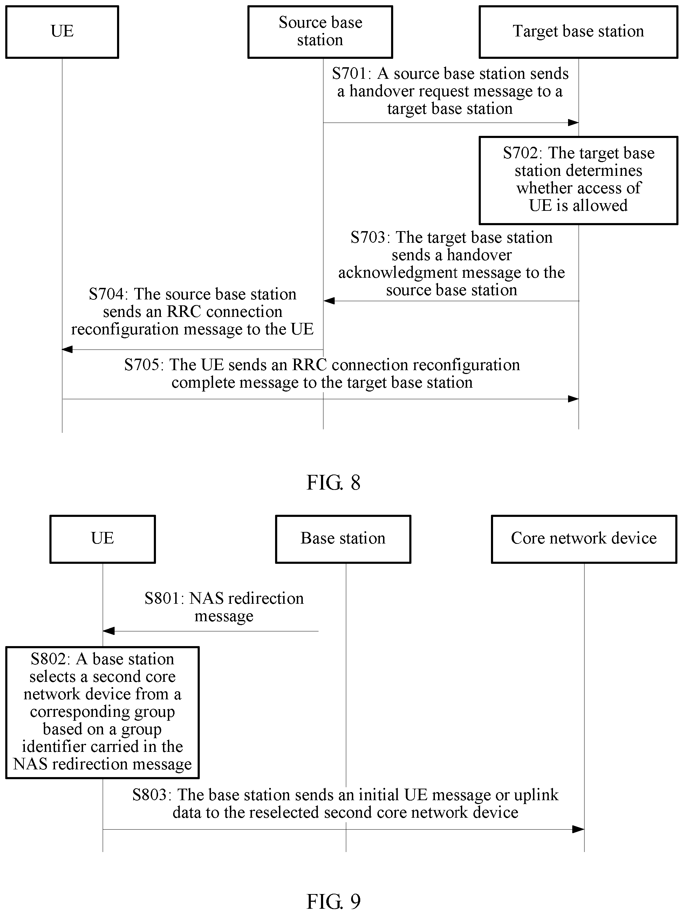

FIG. 8 is a schematic interaction diagram of Example 3 of a method for determining a transmission solution according to the present invention. As shown in FIG. 8:
S701: A source base station sends a handover request message to a target base station.

In this step, for a scenario in which a handover is required, when UE and a network side use a CP/UP solution to perform communication and the source base station determines to perform a handover operation, the source base station sends the handover request (handover Request) message to the target base station. The handover request message indicates the CP/UP solution currently used by the UE.

Optionally, a capability supported by the UE may be indicated in the handover request message. For example, the UE supports only CP or only UP or both CP and UP. A solution that the UE tends to support may be indicated in the handover request message.

Optionally, the two types of information may be placed in uplink and downlink information of the UE, or may be stored as a separate IE.

S702: The target base station determines whether access of UE is allowed.

In this step, the target base station determines whether a transmission solution currently used by the UE is the same as a transmission solution supported by the target base station, and if yes, allows access of the UE, or if no, does not allow access of the UE.

Optionally, if a capability supported by the target base station is inconsistent with a capability that is indicated by the source base station and that is used by the UE and the network side, the target base station may send a handover request ACK to the source base station to indicate a solution that the UE needs to use.
S703: The target base station sends a handover acknowledgment message to the source base station.
S704: The source base station sends an RRC connection reconfiguration message to the UE.
S705: The UE sends an RRC connection reconfiguration complete message to the target base station.

In the foregoing steps, if the target base station allows access and the target base station supports the transmission solution indicated by the source base station, an acknowledgment may be indicated in the handover acknowledgment. The source base station sends RRC reconfiguration information to the UE after receiving the handover request acknowledgment message. The solution used by the UE may be indicated in the information. The UE performs connection configuration on the target base station, and then sends the connection reconfiguration complete message to the target base station.

Optionally, if a capability supported by the target base station is inconsistent with a capability that is indicated by the source base station and that is used by the UE and the network side, the target base station may send the handover request ACK to the source base station to indicate a solution that the UE needs to use. After receiving the message, the source base station uses the RRC connection reconfiguration message to send the message to the UE. After receiving the message, the UE sends the RRC connection reconfiguration complete message to the target base station.

If the base station finds that the capability supported by the UE and the capability supported by the base station do not match, if the base station can fall back to another capability such as a legacy LTE transmission solution, the base station may use a fallback solution. If fallback is not supported, the base station may send handover reject information, namely, a handover preparation failure, to the source base station, where the handover reject information carries a cause value indicating that the capability is not supported.

Optionally, the source base station indicates only a capability used by the UE on the source base station but does not indicate the capability supported by the UE, the target base station allows access, and the target base station supports the transmission solution indicated by the source base station. In this case, an acknowledgment may be indicated in the handover acknowledgment. The source base station sends RRC reconfiguration information to the UE after receiving the handover request acknowledgment message. A solution used by the UE may be indicated in the information.

Optionally, if the target base station does not support the transmission solution indicated by the source base station, a solution that the UE needs to use may be indicated in the handover acknowledgment information. After receiving the handover acknowledgment information, the source base station forwards the handover acknowledgment information to the UE by using a reconfiguration message. If the UE supports the solution, an acknowledgment indication is provided in the RRC connection reconfiguration complete message sent by the target base station, and the indicated solution is used in a connection established to the target base station.

If the UE does not support the solution, the UE sends an RRC connection reconfiguration failure to the target base station.

In this solution, if the target base station rejects access, a handover reject message returned to the source base station may carry a reject cause.

Optionally, if the target base station determines that the transmission solution currently used by the UE is different from a transmission solution capability supported by the target base station, access of the UE may be directly rejected during access of the UE.

The method for determining a transmission solution provided in this embodiment is applied to the base station currently connected to the UE and the target base station to which the UE is to be handed over. The UE does not necessarily need to switch a transmission solution, but instead, a manner of handover to the base station may be used to resolve a problem that capabilities do not match.

Based on any one of the foregoing implementations, the present invention further provides a manner in which a base station indicates a transmission solution in a broadcast mode. A specific implementation process is as follows:

The base station makes a broadcast to indicate a transmission solution. Specifically, a CP/UP capability supported by the base station may be indicated, or the CP capability is supported by default. When the base station supports the UP capability, 1 bit may be used for indication in the broadcast. The bit may be placed in a MIB or a SIB 1 or another message. After performing cell reselection, if UE reads a broadcast message of a cell and finds that a capability supported by the base station and a transmission solution supported by the UE do not match, the UE may not perform data service access, but signaling access is not restricted.

The UE initiates attach or tracking area update to renegotiate about a CP solution and a UP solution. The UE performs access by using a re-agreed capability supported by the base station. Alternatively, the UE directly switches the transmission solution, and then uses the switched-to CP solution or UP solution to access a network to perform renegotiation and data transmission.

According to the method for determining a transmission solution provided in this implementation, the UE can obtain the capability of the base station by using the transmission solution broadcast by the base station, to avoid a case in which capabilities do not match after access and the UE cannot work normally. A system message is used to make a broadcast.

In addition to various cases provided above in which capabilities do not match and consequently the UE cannot work normally after accessing the base station, for services of types such as smart metering that are mainly small data packet reporting services and that have small data volumes, currently there are mainly two transmission solutions, namely, a control plane transmission solution and a user plane transmission solution. If the user plane transmission solution is used, data passes through an S-GW to reach a P-GW, and signaling passes through an MME. In the control solution, both signaling and data pass through the MME, and therefore, the MME may be overloaded.

For this case, that the base station obtains a transmission solution switching instruction of the user equipment UE may further include: receiving, by the base station, an overload indication sent by a core network device; and if the overload indication indicates that control plane transmission of the core network device is overloaded, generating, by the base station, the transmission solution switching instruction of the UE, where the transmission solution switching instruction instructs to switch the transmission solution of the UE from control plane transmission to user plane transmission.

A specific implementation is: sending, by the MME, the overload indication to the base station, where an overload cause is added to the overload indication based on existing signaling. The overload cause indicates that the MME is overloaded due to the CP solution.

The base station broadcasts information indicating whether the MME is overloaded. The information specifically includes whether a function that the MME rejects a CP solution (with non-exception report) (a CP solution with Non-exception report) is activated. To save more power, an activation indication may be represented by 1 bit and may be placed in a MIB or a SIB 1 or another system message.

After the function is activated, if the UE using the CP solution needs to initiate service access, the UE may need to perform two operations as required:
1. The UE does not initiate data access and feeds back a cause value to a NAS layer. The NAS layer determines whether to initiate access again. Before accessing a network next time, the UE checks again whether an MME overload function in a system message is activated.
2. The UE (which also supports UP) initiates attach or TAU to renegotiate about the CP solution and the UP solution.
3. UE that supports both CP and UP may directly initiate a connection and add a service request (Service Request) to an RRC connection setup complete (RRC Connection Setup Complete) message, to trigger to use the UP solution. Alternatively, if there is already a context of suspending the UP solution, an RRC restoration procedure is performed.

According to the method for determining a transmission solution provided in this embodiment, the UE using the CP solution may determine, based on a broadcast indication, whether access control is to be performed on the UE. If access is avoided, connection of the UE is rejected. In this way, a problem that the MME is overloaded caused by the CP solution is rapidly resolved. The solution is simple and efficient, and effectively saves electricity of the UE.

Based on the foregoing embodiments, a procedure in which the MME sends overload indication information to the base station is the same as that in the foregoing solution. In this case, the base station may further have the following two processing manners:

In Manner 1, the UE adds a CP indication to the RRC connection request message. The CP indication in the RRC connection request message indicates that the UE uses the CP solution. The base station rejects the UE based on the overload indication of the MME. In this case, the base station may return an RRC connection reject message to the UE. The RRC connection reject message carries a reject cause and/or an indication message and/or a redirection message. The reject cause is that the UE is rejected because the MME is overloaded. The indication information may include a backoff time of the UE using the CP solution.

In Manner 2, the UE adds a CP indication to the RRC connection setup complete message. The base station rejects the UE based on the overload indication of the MME. In this case, the base station may return an RRC connection release message to the UE. The RRC connection release message carries a reject cause or an indication message and/or a redirection message. The reject cause is that the UE is rejected because the MME is overloaded. The indication information may include a backoff time of the UE using the CP solution.

After the UE is rejected, possible operations may be as follows: The UE may back off based on a wait time-related parameter carried in the indication message. Alternatively, the UE initiates TAU or attach to use the UP solution in place of the CP solution to continue to perform data transmission. This method is also applicable to UE that supports the UP solution.

According to the method for determining a transmission solution provided in this embodiment, a reject cause is added to the RRC connection reject message returned by the base station to the UE. The UE may back off or perform re-attach or tracking area update based on the indication information, thereby effectively reducing load of the MME and avoiding a problem that the UE cannot work normally after access due to overload.

For the case in which the MME is overloaded, in a specific implementation, a specific processing manner for a case in which a core network device is overloaded is provided. After the base station determines a transmission solution of the UE by using transmission solution indication information carried in an RRC connection request sent by the UE, if the base station receives indication information that is sent by the core network device and that indicates that overload occurs in a transmission solution currently used by the UE, the base station adds a transmission solution switching instruction to an RRC connection setup message and sends the RRC connection setup message to the UE, to instruct the UE to switch to a transmission solution different from the current transmission solution.

Specifically, the MME is used as an example. An RRC connection request sent by the UE to the base station carries an indication indicating that the CP solution is used. After the MME sends, to the base station, the overload indication information indicating that a cause value is the CP solution, the base station adds the indication information instructing the UE to switch to the UP solution to the RRC connection setup message based on the overload indication information. After receiving the message, the UE sends an RRC connection setup complete message to the base station, to indicate that switching is completed, and sends an initial UE message to the MME, to indicate that the solution is switched. If the UE does not support the UP solution, the UE uses an RRC connection setup complete message to notify the base station and enters a connection release process. Optionally, the UE or the MME may send information about the capability supported by the UE to the base station. Therefore, if the base station knows that the UE does not support UP, a connection may be directly released.

Further, the UE releases a connection and then may select another cell to camp on or reselect a suitable core network device based on information obtained by the base station.

Overload of the MME is handled in the foregoing manner.

Optionally, in a specific implementation, after the MME is overloaded due to use of the CP solution, an S1 release procedure may be triggered for UE in a connected mode. A trigger cause is that overload is caused by the CP solution. A UE context release command is sent to the base station. A cause "load balancing TAU required" is carried in the UE context release command. The cause is notified to the UE by using an RRC connection release message, to perform TAU, so that the base station can select another MME during MME selection. An MME is specifically determined by using a weight value of selecting the MME that is sent by the MME to the base station. The weight value of the MME may be set to 0 or a relatively small probability. Alternatively, renegotiation is performed. For UE in an idle mode, the UE may first enter a connected mode through paging, and then the foregoing process is performed. The UE using the CP solution may perform TAU to select another MME or perform renegotiation. In this way, load balance between MMEs is implemented, and a case in which the UE cannot use CP to perform transmission for a long time is avoided. The same manner may be used to perform load balancing for another core network device using the UP solution.

FIG. 9 is a schematic interaction diagram of Example 6 of a method for determining a transmission solution according to the present invention. As shown in FIG. 9, in the solution, after a current core network device, that is, a first core network device in the figure, determines that overload occurs due to use of a control plane transmission solution, the core network device sends a NAS redirection message (namely, a NAS Message Redirection Procedure) to a base station. The base station selects a new core network device based on a group identifier of core network devices that is included in route parameters (reroute parameters) in the message. Alternatively, specifically, the core network device may interact with another core network device to select one core network device that also supports a CP capability, that is, a second core network device in the figure, and send a specific identifier of the core network device to the base station, to perform rerouting. Likewise, when overload is caused by UP, the same manner may be used. Specific implementation steps are as follows:
S801: NAS redirection message.
S802: The base station selects the second core network device from a corresponding group based on a group identifier carried in the NAS redirection message.

The second core network device and the first core network both support a CP transmission solution.

S803: The base station sends an initial UE message or uplink data to the reselected second core network device.

An MME is used as an example. When the MME is overloaded due to use of the CP solution, the MME sends the "NAS Message Redirection Procedure" to the base station. The base station selects a new MME based on a group identifier included in "reroute parameters" in the message. Alternatively, the MME may interact with another MME to select one MME that also supports a CP capability, and send a specific ID of the MME to the base station to perform rerouting.

In a specific implementation of the method for determining a transmission solution provided in this embodiment, the base station performs rerouting to a new core network device based on an instruction of a core network device, so that load of the original core network device is reduced, and a problem that UE fails to perform transmission due to overload of the core network device can be avoided.

In any one of the foregoing solutions, if the UE switches a transmission solution, after switching is completed, a report needs to be made to the MME. The UE may use an uplink NAS transport message to make a report to the MME directly, or may make a report to the MME by using the initial UE message sent by the base station or another uplink message.

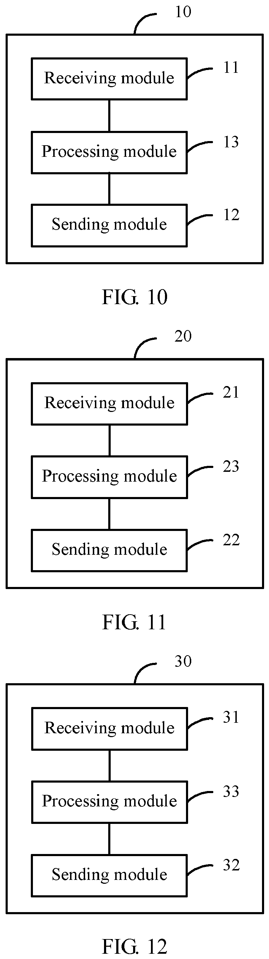

FIG. 10 is a schematic structural diagram of Embodiment 1 of an apparatus for determining a transmission solution according to the present invention. As shown in FIG. 10, the apparatus 10 for determining a transmission solution includes a receiving module 11 for receiving a message, a sending module 12 for sending a message, and a processing module 13 for controlling execution of a program instruction.

The receiving module 11 is configured to obtain a transmission solution switching instruction of user equipment UE, where the transmission solution switching instruction of the UE is used to instruct to switch a transmission solution of the UE from user plane transmission to control plane transmission or from control plane transmission to user plane transmission.

The processing module 13 is configured to configure a switched-to transmission solution with the UE based on the transmission solution switching instruction.

The apparatus for determining a transmission solution provided in this embodiment is configured to perform the technical solution of the base station in any one of the foregoing method embodiments, and has similar implementation principles and technical effects. Details are not described herein again.

Based on the foregoing embodiments, if the transmission solution switching instruction instructs to switch the transmission solution of the UE from user plane transmission to control plane transmission, the sending module 12 is configured to send a first instruction to the UE, where the first instruction is used to instruct the UE to suspend or release context information used in user plane transmission.

The receiving module 11 is further configured to receive a context information suspend complete message sent by the UE.

Based on the foregoing two solutions, the sending module 12 is specifically configured to:
send a radio resource control RRC connection reconfiguration message to the UE, where the RRC connection reconfiguration message carries the first instruction; or
send an RRC connection suspend request message to the UE, where the RRC connection suspend request message carries the first instruction.

Optionally, the receiving module 11 is specifically configured to:
receive an initial context setup request message sent by a core network device, where the initial context setup request message carries the transmission solution switching instruction of the UE; or
receive a UE context restoration message sent by a core network device, where the UE context restoration message carries the transmission solution switching instruction of the UE; or
receive a downlink non-access stratum transport message sent by the core network device, where the downlink NAS transport message carries the transmission solution switching instruction of the UE.

Optionally, if the transmission solution switching instruction instructs to switch the transmission solution of the UE from control plane transmission to user plane transmission, the sending module 12 is further configured to send a security mode command message to the UE;
the receiving module 11 is further configured to receive a security mode complete message sent by the UE;
the sending module 12 is further configured to send an RRC connection to the UE, where the RRC connection reconfiguration message carries information for instructing to stop using control plane transmission; and
the receiving module 11 is further configured to receive an RRC connection reconfiguration complete message sent by the UE.

Optionally, the receiving module 11 is further configured to receive a NAS message that is sent by the UE and that instructs to use user plane transmission;
the sending module 12 is further configured to forward the NAS message to the core network device; and
the receiving module 11 is further configured to receive the transmission solution switching instruction of the UE that is sent by the core network device.

Optionally, the receiving module 11 is specifically configured to:
receive an RRC connection setup complete message sent by the UE, where the RRC connection setup complete message carries the NAS message; and
the sending module 12 is further configured to send an initial UE message to the core network device, where the initial UE message carries the NAS message.

Optionally, the receiving module 11 is further configured to receive a first transmission solution that is sent by the UE and that is agreed on by the UE and a core network device; and
if a second transmission solution supported by the apparatus 10 for determining a transmission solution is different from the first transmission solution, the sending module 12 is further configured to instruct to switch a transmission solution for the UE.

Optionally, the receiving module 11 is specifically configured to:
receive an RRC connection setup request message sent by the UE, where the RRC connection setup request message carries the first transmission solution; or
receive an RRC connection setup complete message sent by the UE, where the RRC connection setup complete message carries the first transmission solution; or
receive an RRC connection restoration message sent by the UE, where the RRC connection restoration message carries the first transmission solution; or
receive an RRC restoration complete message sent by the UE, where the RRC restoration complete message carries the first transmission solution.

Optionally, the receiving module 11 is further configured to receive an overload indication sent by a core network device; and
if the overload indication indicates that control plane transmission of the core network device is overloaded, the processing module 13 is further configured to generate the transmission solution switching instruction of the UE, where the transmission solution switching instruction instructs to switch the transmission solution of the UE from control plane transmission to user plane transmission.

The apparatus for determining a transmission solution provided in this embodiment is configured to perform the technical solution of the base station in any one of the foregoing method embodiments, and has similar implementation principles and technical effects. Details are not described herein again.

FIG. 11 is a schematic structural diagram of Embodiment 2 of an apparatus for determining a transmission solution according to the present invention. As shown in FIG. 11, the apparatus 20 for determining a transmission solution includes:
a receiving module 21 for receiving a message, a sending module 22 for sending a message, and a processing module 23 for controlling execution of a program instruction.

The receiving module 21 is configured to obtain a transmission solution switching instruction, where the transmission solution switching instruction is used to instruct to switch a transmission solution of the apparatus for determining a transmission solution from user plane transmission to control plane transmission or from control plane transmission to user plane transmission.

The processing module 23 is configured to configure a switched-to transmission solution with a base station based on the transmission solution switching instruction.

The apparatus for determining a transmission solution provided in this embodiment is configured to perform the technical solution of the user equipment in any one of the foregoing method embodiments, and has similar implementation principles and technical effects. Details are not described herein again.

Based on the foregoing solution, if the transmission solution switching instruction instructs to switch the transmission solution of the apparatus for determining a transmission solution from user plane transmission to control plane transmission, the receiving module 21 is further configured to receive a first instruction sent by the base station, where the first instruction is used to instruct the UE to suspend or release context information used in user plane transmission;
the processing module 23 is further configured to suspend or release the context information used in user plane transmission; and
the sending module 22 is configured to send a context information suspend complete message to the base station.

Based on the foregoing embodiments, the receiving module 21 is specifically configured to receive a radio resource control RRC connection reconfiguration message sent by the base station, where the RRC connection reconfiguration message carries the first instruction.

Optionally, if the transmission solution switching instruction instructs to switch the transmission solution of the apparatus for determining a transmission solution from control plane transmission to user plane transmission, the receiving module 21 is further configured to receive a security mode command message sent by the base station;
the processing module 23 is further configured to establish a security mode;
the sending module 22 is further configured to send a security mode complete message to the base station;
the receiving module 21 is further configured to receive an RRC connection reconfiguration message sent by the base station, where the RRC connection reconfiguration message carries information for instructing to stop using control plane transmission;
the processing module 23 is further configured to perform RRC connection configuration; and
the sending module 22 is further configured to send an RRC connection reconfiguration complete message to the base station.

Optionally, the receiving module 21 is further configured to receive the transmission solution switching instruction sent by the base station; or
the sending module 22 is further configured to send an RRC connection setup request message to the base station; and
the receiving module 21 is further configured to: receive an RRC connection reject message sent by the base station, and generate the transmission solution switching instruction based on the RRC connection reject message; or
the sending module 22 is further configured to send an RRC connection setup complete message to the base station; and
the receiving module 21 is further configured to: receive an RRC connection release message sent by the base station, and generate the transmission solution switching instruction based on the RRC connection release message.

The apparatus for determining a transmission solution provided in this embodiment is configured to perform the technical solution of the user equipment in any one of the foregoing method embodiments, and has similar implementation principles and technical effects. Details are not described herein again.

FIG. 12 is a schematic structural diagram of Embodiment 3 of an apparatus for determining a transmission solution according to the present invention. As shown in FIG. 12, the apparatus 30 for determining a transmission solution includes a receiving module 31 for receiving a message, a sending module 32 for sending a message, and a processing module 33 for controlling execution of a program instruction.

The sending module 32 is configured to send a first message to a base station, where the first message is used to enable the base station to determine a transmission solution switching instruction of user equipment UE, and the transmission solution switching instruction is used to instruct to switch a transmission solution of the UE from user plane transmission to control plane transmission.

The receiving module 31 is configured to receive a transmission solution switching complete message of the UE that is returned by the base station.

Optionally, the sending module 32 is specifically configured to:
send an initial context setup request message to the base station, where the first message is the initial context setup request message; or
send a downlink non-access stratum NAS transport message to the base station, where the first message is the downlink NAS transport message, and the downlink NAS transport message carries the transmission solution switching instruction of the UE.

Optionally, the receiving module 31 is specifically configured to:
receive an initial UE message sent by the base station, where the initial UE message includes a buffer status report BSR of the UE, a data volume indication DVI, or the transmission solution switching instruction of the UE; or
receive an uplink NAS transport message sent by the base station, where the uplink NAS transport message includes a BSR of the UE, a DVI, or the transmission solution switching instruction of the UE.

Optionally, the first information sent by the sending module 32 further includes an overload indication, and the overload indication is used to indicate that control plane transmission of the apparatus for determining a transmission solution is overloaded.

The apparatus for determining a transmission solution provided in this embodiment is configured to perform the technical solution of the core network device in any one of the foregoing method embodiments, and has similar implementation principles and technical effects. Details are not described herein again.

The apparatus for determining a transmission solution shown in FIG. 10 may be specifically implemented as a base station. The base station includes a memory storing a program instruction, a processor for controlling execution of the program instruction, a receiver for receiving a message, and a transmitter for sending a message. In this case, the receiving module may be implemented as the receiver, the sending module may be specifically implemented as the transmitter, and the processing module may be implemented as the processor.

The apparatus for determining a transmission solution shown in FIG. 11 may be specifically implemented as user equipment. The user equipment includes a memory storing a program instruction, a processor for controlling execution of the program instruction, a receiver for receiving a message, and a transmitter for sending a message. In this case, the receiving module may be implemented as the receiver, the sending module may be specifically implemented as the transmitter, and the processing module may be implemented as the processor.

The apparatus for determining a transmission solution shown in FIG. 12 may be specifically implemented as a core network device, for example, an MME. The core network device includes a memory storing a program instruction, a processor for controlling execution of the program instruction, a receiver for receiving a message, and a transmitter for sending a message. In this case, the receiving module may be implemented as the receiver, the sending module may be specifically implemented as the transmitter, and the processing module may be implemented as the processor.

In the foregoing embodiments of the user equipment, the base station, or the core network device, it should be understood that the processor may be a central processing unit (English: Central Processing Unit, CPU for short), or may be another general-purpose processor, a digital signal processor (English: Digital Signal Processor, DSP for short), an application-specific integrated circuit (English: Application Specific Integrated Circuit, ASIC for short), or the like. The general-purpose processor may be a microprocessor or the processor may be any conventional processor or the like. The steps of the method disclosed with reference to the embodiments of the present invention may be directly performed by a hardware processor, or may be performed by using a combination of hardware in the processor and a software module. Optionally, the user equipment may further include a user interface, a display (for example, a touchscreen, an LCD, a CRT, a holographic (Holographic) imaging device, or a projector (Projector)), a keyboard, or a click device (for example, a mouse, a trackball (trackball), a touchpad, or a touchscreen).

The receiver and the transmitter may specifically include a transmitter circuit and a receiver circuit, and carriers thereof, to allow data transmission and reception between the user equipment and the base station or a wireless network router. The transmitter circuit and the receiver circuit may be coupled to an antenna for implementation.

In some implementations, the memory stores the following elements: executable modules or data structures, or subsets thereof, or extended sets thereof: an operating system, including various system programs, for example, a frame layer, a kernel library layer, and a driver layer, and configured to implement various basic services and process hardware-based tasks; and optionally, may further include application program modules, including various application programs, for example, a launcher (launcher), a media player (Media Player), and a browser (Browser) shown in FIG. 1, and configured to implement various application services.

Persons of ordinary skill in the art may understand that all or some of the steps of the method embodiments may be implemented by a program instructing relevant hardware. The program may be stored in a computer-readable storage medium. When the program is executed, the steps of the methods in the embodiments are performed. The storage medium includes: a read-only memory (English: read-only memory, ROM for short), a RAM, a flash memory, a hard disk, a solid state disk, a magnetic tape (English: magnetic tape), a floppy disk (English: floppy disk), an optical disc (English: optical disc), and any combination thereof.

Finally, it should be noted that the foregoing embodiments are merely intended for describing the technical solutions of the present invention, but not for limiting the present invention. Although the present invention is described in detail with reference to the foregoing embodiments, persons of ordinary skill in the art it should understand that they may still make modifications to the technical solutions described in the foregoing embodiments or make equivalent replacements to some or all technical features thereof, without departing from the scope of the technical solutions of the embodiments of the present invention.

## Claims

1. A method for determining a transmission solution, comprising:
obtaining, by a base station, a transmission solution switching instruction of user equipment UE, wherein the transmission solution switching instruction of the UE is used to instruct to switch a transmission solution of the UE from user plane transmission to control plane transmission or from control plane transmission to user plane transmission; and
configuring, by the base station, a switched-to transmission solution with the UE based on the transmission solution switching instruction.

2. The method according to claim 1, wherein if the transmission solution switching instruction instructs to switch the transmission solution of the UE from user plane transmission to control plane transmission, the configuring, by the base station, a switched-to transmission solution with the UE based on the transmission solution switching instruction comprises:
sending, by the base station, a first instruction to the UE, wherein the first instruction is used to instruct the UE to suspend or release context information used in user plane transmission; and
receiving, by the base station, a context information suspend complete message sent by the UE.

3. The method according to claim 2, wherein the sending, by the base station, a first instruction to the UE comprises:
sending, by the base station, a radio resource control RRC connection reconfiguration message to the UE, wherein the RRC connection reconfiguration message carries the first instruction; or
sending, by the base station, an RRC connection suspend request message to the UE, wherein the RRC connection suspend request message carries the first instruction.

4. The method according to claim 2 or 3, wherein the obtaining, by a base station, a transmission solution switching instruction of user equipment UE comprises:
receiving, by the base station, an initial context setup request message sent by a core network device, wherein the initial context setup request message carries the transmission solution switching instruction of the UE; or
receiving, by the base station, a UE context restoration message sent by a core network device, wherein the UE context restoration message carries the transmission solution switching instruction of the UE; or
receiving, by the base station, a downlink non-access stratum transport message sent by the core network device, wherein the downlink NAS transport message carries the transmission solution switching instruction of the UE.

5. The method according to claim 1, wherein if the transmission solution switching instruction instructs to switch the transmission solution of the UE from control plane transmission to user plane transmission, the configuring, by the base station, a switched-to transmission solution with the UE based on the transmission solution switching instruction comprises:
sending, by the base station, a security mode command message to the UE;
receiving, by the base station, a security mode complete message sent by the UE;
sending, by the base station, an RRC connection reconfiguration message to the UE, wherein the RRC connection reconfiguration message carries information for instructing to stop using control plane transmission; and
receiving, by the base station, an RRC connection reconfiguration complete message sent by the UE.

6. The method according to claim 5, wherein the obtaining, by a base station, a transmission solution switching instruction of user equipment UE comprises:
receiving, by the base station, a NAS message that is sent by the UE and that instructs to use user plane transmission;
forwarding, by the base station, the NAS message to the core network device; and
receiving, by the base station, the transmission solution switching instruction of the UE that is sent by the core network device.

7. The method according to claim 6, wherein the receiving, by the base station, a NAS message that is sent by the UE and that instructs to use user plane transmission comprises:
receiving, by the base station, an RRC connection setup complete message sent by the UE, wherein the RRC connection setup complete message carries the NAS message; and
the forwarding, by the base station, the NAS message to the core network device comprises:
sending, by the base station, an initial UE message to the core network device, wherein the initial UE message carries the NAS message.

8. The method according to claim 1, wherein the obtaining, by a base station, a transmission solution switching instruction of user equipment UE comprises:
receiving, by the base station, a first transmission solution that is sent by the UE and that is agreed on by the UE and a core network device; and
if a second transmission solution supported by the base station is different from the first transmission solution, instructing, by the base station, to switch a transmission solution for the UE.

9. The method according to claim 8, wherein the receiving, by the base station, a first transmission solution that is sent by the UE and that is agreed on by the UE and a core network comprises:
receiving, by the base station, an RRC connection setup request message sent by the UE, wherein the RRC connection setup request message carries the first transmission solution; or
receiving, by the base station, an RRC connection setup complete message sent by the UE, wherein the RRC connection setup complete message carries the first transmission solution; or
receiving, by the base station, an RRC connection restoration message sent by the UE, wherein the RRC connection restoration message carries the first transmission solution; or
receiving, by the base station, an RRC restoration complete message sent by the UE, wherein the RRC restoration complete message carries the first transmission solution.

10. The method according to claim 1, wherein the obtaining, by a base station, a transmission solution switching instruction of user equipment UE comprises:
receiving, by the base station, an overload indication sent by a core network device; and
if the overload indication indicates that control plane transmission of the core network device is overloaded, generating, by the base station, the transmission solution switching instruction of the UE, wherein the transmission solution switching instruction instructs to switch the transmission solution of the UE from control plane transmission to user plane transmission.

11. A method for determining a transmission solution, comprising:
obtaining, by user equipment UE, a transmission solution switching instruction, wherein the transmission solution switching instruction is used to instruct to switch a transmission solution of the UE from user plane transmission to control plane transmission or from control plane transmission to user plane transmission; and
configuring, by the UE, a switched-to transmission solution with a base station based on the transmission solution switching instruction.

12. The method according to claim 11, wherein if the transmission solution switching instruction instructs to switch the transmission solution of the UE from user plane transmission to control plane transmission, the configuring, by the UE, a switched-to transmission solution with a base station based on the transmission solution switching instruction comprises:
receiving, by the UE, a first instruction sent by the base station, wherein the first instruction is used to instruct the UE to suspend or release context information used in user plane transmission;
suspending or releasing, by the UE, the context information used in user plane transmission; and
sending, by the UE, a context information suspend complete message to the base station.

13. The method according to claim 12, wherein the receiving, by the UE, a first instruction sent by the base station comprises:
receiving, by the UE, a radio resource control RRC connection reconfiguration message sent by the base station, wherein the RRC connection reconfiguration message carries the first instruction.

14. The method according to claim 11, wherein if the transmission solution switching instruction instructs to switch the transmission solution of the UE from control plane transmission to user plane transmission, the configuring, by the UE, a switched-to transmission solution with a base station based on the transmission solution switching instruction comprises:
receiving, by the UE, a security mode command message sent by the base station;
establishing, by the UE, a security mode, and sending a security mode complete message to the base station;
receiving, by the UE, an RRC connection reconfiguration message sent by the base station, wherein the RRC connection reconfiguration message carries information for instructing to stop using control plane transmission; and
performing, by the UE, RRC connection configuration, and sending an RRC connection reconfiguration complete message to the base station.

15. The method according to any one of claims 11 to 14, wherein the obtaining, by user equipment UE, a transmission solution switching instruction comprises:
receiving, by the UE, the transmission solution switching instruction sent by the base station; or
sending, by the UE, an RRC connection setup request message to the base station; and
receiving, by the UE, an RRC connection reject message sent by the base station, and generating the transmission solution switching instruction based on the RRC connection reject message; or
sending, by the UE, an RRC connection setup complete message to the base station; and
receiving, by the UE, an RRC connection release message sent by the base station, and generating the transmission solution switching instruction based on the RRC connection release message.

16. A method for determining a transmission solution, comprising:
sending, by a core network device, a first message to a base station, wherein the first message is used to enable the base station to determine a transmission solution switching instruction of user equipment UE, and the transmission solution switching instruction is used to instruct to switch a transmission solution of the UE from user plane transmission to control plane transmission; and
receiving, by the core network device, a transmission solution switching complete message of the UE that is returned by the base station.

17. The method according to claim 16, wherein the sending, by a core network device, a first message to a base station comprises:
sending, by the core network device, an initial context setup request message to the base station, wherein the first message is the initial context setup request message; or
sending, by the core network device, a downlink non-access stratum NAS transport message to the base station, wherein the first message is the downlink NAS transport message, and the downlink NAS transport message carries the transmission solution switching instruction of the UE.

18. The method according to claim 16 or 17, wherein before the sending, by a core network device, a first message to a base station, the method further comprises:
receiving, by the core network device, an initial UE message sent by the base station, wherein the initial UE message comprises a buffer status report BSR of the UE, a data volume indication DVI, or the transmission solution switching instruction of the UE; or
receiving, by the core network device, an uplink NAS transport message sent by the base station, wherein the uplink NAS transport message comprises a BSR of the UE, a DVI, or the transmission solution switching instruction of the UE.

19. The method according to claim 16, wherein the first information further comprises an overload indication, and the overload indication is used to indicate that control plane transmission of the core network device is overloaded.

20. An apparatus for determining a transmission solution, comprising:
a receiving module for receiving a message, a sending module for sending a message, and a processing module for controlling execution of a program instruction, wherein
the receiving module is configured to obtain a transmission solution switching instruction of user equipment UE, wherein the transmission solution switching instruction of the UE is used to instruct to switch a transmission solution of the UE from user plane transmission to control plane transmission or from control plane transmission to user plane transmission; and
the processing module is configured to configure a switched-to transmission solution with the UE based on the transmission solution switching instruction.

21. The apparatus according to claim 20, wherein if the transmission solution switching instruction instructs to switch the transmission solution of the UE from user plane transmission to control plane transmission, the sending module is configured to send a first instruction to the UE, wherein the first instruction is used to instruct the UE to suspend or release context information used in user plane transmission; and
the receiving module is further configured to receive a context information suspend complete message sent by the UE.

22. The apparatus according to claim 21, wherein the sending module is specifically configured to:
send a radio resource control RRC connection reconfiguration message to the UE, wherein the RRC connection reconfiguration message carries the first instruction; or
send an RRC connection suspend request message to the UE, wherein the RRC connection suspend request message carries the first instruction.

23. The apparatus according to claim 21 or 22, wherein the receiving module is specifically configured to:
receive an initial context setup request message sent by a core network device, wherein the initial context setup request message carries the transmission solution switching instruction of the UE; or
receive a UE context restoration message sent by a core network device, wherein the UE context restoration message carries the transmission solution switching instruction of the UE; or
receive a downlink non-access stratum transport message sent by the core network device, wherein the downlink NAS transport message carries the transmission solution switching instruction of the UE.

24. The apparatus according to claim 21, wherein if the transmission solution switching instruction instructs to switch the transmission solution of the UE from control plane transmission to user plane transmission, the sending module is further configured to send a security mode command message to the UE;
the receiving module is further configured to receive a security mode complete message sent by the UE;
the sending module is further configured to send an RRC connection reconfiguration message to the UE, wherein the RRC connection reconfiguration message carries information for instructing to stop using control plane transmission; and
the receiving module is further configured to receive an RRC connection reconfiguration complete message sent by the UE.

25. The apparatus according to claim 24, wherein the receiving module is further configured to receive a NAS message that is sent by the UE and that instructs to use user plane transmission;
the sending module is further configured to forward the NAS message to the core network device; and
the receiving module is further configured to receive the transmission solution switching instruction of the UE that is sent by the core network device.

26. The apparatus according to claim 25, wherein the receiving module is specifically configured to:
receive an RRC connection setup complete message sent by the UE, wherein the RRC connection setup complete message carries the NAS message; and
the sending module is further configured to send an initial UE message to the core network device, wherein the initial UE message carries the NAS message.

27. The apparatus according to claim 21, wherein the receiving module is further configured to receive a first transmission solution that is sent by the UE and that is agreed on by the UE and a core network device; and
if a second transmission solution supported by the base station is different from the first transmission solution, the sending module is further configured to instruct to switch a transmission solution for the UE.

28. The apparatus according to claim 27, wherein the receiving module is specifically configured to:
receive an RRC connection setup request message sent by the UE, wherein the RRC connection setup request message carries the first transmission solution; or
receive an RRC connection setup complete message sent by the UE, wherein the RRC connection setup complete message carries the first transmission solution; or
receive an RRC connection restoration message sent by the UE, wherein the RRC connection restoration message carries the first transmission solution; or
receive an RRC restoration complete message sent by the UE, wherein the RRC restoration complete message carries the first transmission solution.

29. The apparatus according to claim 20, wherein the receiving module is further configured to receive an overload indication sent by a core network device; and
if the overload indication indicates that control plane transmission of the core network device is overloaded, the processing module is further configured to generate the transmission solution switching instruction of the UE, wherein the transmission solution switching instruction instructs to switch the transmission solution of the UE from control plane transmission to user plane transmission.

30. An apparatus for determining a transmission solution, comprising:
a receiving module for receiving a message, a sending module for sending a message, and a processing module for controlling execution of a program instruction, wherein
the receiving module is configured to obtain a transmission solution switching instruction, wherein the transmission solution switching instruction is used to instruct to switch a transmission solution of the apparatus for determining a transmission solution from user plane transmission to control plane transmission or from control plane transmission to user plane transmission; and
the processing module is configured to configure a switched-to transmission solution with a base station based on the transmission solution switching instruction.

31. The apparatus according to claim 30, wherein if the transmission solution switching instruction instructs to switch the transmission solution of the apparatus for determining a transmission solution from user plane transmission to control plane transmission, the receiving module is configured to receive a first instruction sent by the base station, wherein the first instruction is used to instruct the UE to suspend or release context information used in user plane transmission;
the processing module is further configured to suspend or release the context information used in user plane transmission; and
the sending module is configured to send a context information suspend complete message to the base station.

32. The apparatus according to claim 31, wherein the receiving module is specifically configured to receive a radio resource control RRC connection reconfiguration message sent by the base station, wherein the RRC connection reconfiguration message carries the first instruction.

33. The apparatus according to claim 30, wherein if the transmission solution switching instruction instructs to switch the transmission solution of the apparatus for determining a transmission solution from control plane transmission to user plane transmission, the receiving module is further configured to receive a security mode command message sent by the base station;
the processing module is further configured to establish a security mode;
the sending module is further configured to send a security mode complete message to the base station;
the receiving module is further configured to receive an RRC connection reconfiguration message sent by the base station, wherein the RRC connection reconfiguration message carries information for instructing to stop using control plane transmission;
the processing module is further configured to perform RRC connection configuration; and
the sending module is further configured to send an RRC connection reconfiguration complete message to the base station.

34. The apparatus according to any one of claims 30 to 33, wherein the receiving module is further configured to receive the transmission solution switching instruction sent by the base station; or
the sending module is further configured to send an RRC connection setup request message to the base station; and
the receiving module is further configured to: receive an RRC connection reject message sent by the base station, and generate the transmission solution switching instruction based on the RRC connection reject message; or
the sending module is further configured to send an RRC connection setup complete message to the base station; and
the receiving module is further configured to: receive an RRC connection release message sent by the base station, and generate the transmission solution switching instruction based on the RRC connection release message.

35. An apparatus for determining a transmission solution, comprising:
a receiving module for receiving a message, a sending module for sending a message, and a processing module for controlling execution of a program instruction, wherein
the sending module is configured to send a first message to a base station, wherein the first message is used to enable the base station to determine a transmission solution switching instruction of user equipment UE, and the transmission solution switching instruction is used to instruct to switch a transmission solution of the UE from user plane transmission to control plane transmission; and
the receiving module is configured to receive a transmission solution switching complete message of the UE that is returned by the base station.

36. The apparatus according to claim 35, wherein the sending module is specifically configured to:
send an initial context setup request message to the base station, wherein the first message is the initial context setup request message; or
send a downlink non-access stratum NAS transport message to the base station, wherein the first message is the downlink NAS transport message, and the downlink NAS transport message carries the transmission solution switching instruction of the UE.

37. The apparatus according to claim 35 or 36, wherein the receiving module is specifically configured to:
receive an initial UE message sent by the base station, wherein the initial UE message comprises a buffer status report BSR of the UE, a data volume indication DVI, or the transmission solution switching instruction of the UE; or
receive an uplink NAS transport message sent by the base station, wherein the uplink NAS transport message comprises a BSR of the UE, a DVI, or the transmission solution switching instruction of the UE.

38. The apparatus according to claim 35, wherein the first information sent by the sending module further comprises an overload indication, and the overload indication is used to indicate that control plane transmission of the apparatus for determining a transmission solution is overloaded.
